(19) **Europäisches Patentamt**
**European Patent Office**
**Office européen des brevets**

(11) Publication number: **0 244 378 B1**

# (12) EUROPEAN PATENT SPECIFICATION

(45) Date of publication of patent specification: **23.10.91**

(51) Int. Cl.⁵: **B60K 17/28**

(21) Application number: **87850112.1**

(22) Date of filing: **07.04.87**

(54) **Power take-off apparatus for tractor.**

(30) Priority: **28.04.86 FI 861769**

(43) Date of publication of application:
**04.11.87 Bulletin 87/45**

(45) Publication of the grant of the patent:
**23.10.91 Bulletin 91/43**

(84) Designated Contracting States:
**AT DE FR GB IT NL SE**

(56) References cited:
**DE-B- 1 286 912**
**FR-A- 2 415 023**
**US-A- 2 968 188**

(73) Proprietor: **Valmet Oy**
**Punanotkonkatu 2**
**SF-00130 Helsinki 13(FI)**

(72) Inventor: **Nilsson, Lars**
**Vintertorpsvägen 9**
**S-63357 Eskilstuna(SE)**
Inventor: **Vilén, Bengt**
**Sävtahiolmsvägen 6**
**S-63347 Eskilstuna(SE)**

(74) Representative: **Rostovanyi, Peter et al**
**AWAPATENT AB Box 5117**
**S-200 71 Malmö(SE)**

Rank Xerox (UK) Business Services

## Description

The present invention generally concerns a power take-off (PTO) apparatus, more specifically a PTO apparatus as stated in the preamble of appended claims 1 and 3. A PTO apparatus of this type is disclosed in FR-A-2 415 023.

Commonly, in prior art, tractors are provided, for working implements, appliances or equivalent to be connected to the tractors, with one or several PTO shafts over which the required power is transmitted to the implement or appliance attached to the tractor. The PTO shaft, or shafts, may be connected to the gearbox of the tractor over a suitable reduction gear so that the PTO shaft can be made to rotate at an expedient speed, or in an expedient speed range, which may be independent of the speed of rotation of the tractor's traction wheels or dependent thereon. One of the conventional PTO shaft designs is the kind in which the tractor is provided with one PTO shaft which can be connected over a reduction gear to rotate with a given speed of rotation which is dependent on the engine speed. It is simple to arrange with such a PTO shaft by the aid of suitable coupling members, a drive by which the PTO shaft can be rotated at a speed which is dependent on the speed of rotation of the tractor's traction wheels. The PTO shaft is in that instance optionally connectable to rotate either at a speed independent of the speed of rotation of the traction wheels or at a speed dependent thereon. Another conventional PTO arrangement is that in which the tractor is provided with two PTO shafts which are connectable to rotate at speeds which are independent of the speed of rotation of the traction wheels, but different from each other.

One of the PTO shafts is then connectable to rotate in the so-called low speed range and the other, in the so-called high speed range. The shaft pins of said PTO shafts, from which the power is transferred to the working implements or equivalent, have then been shaped to be different, e.g. in the way that the diameters of said shaft pins are different and/or that the shaft pins have been provided with different splining. By such arrangements one achieves prevention of any working implement intended to be operated from the low speed shaft pin being connected to the high speed shaft pin.

One more PTO design of prior art is that in which the tractor is provided with one PTO shaft which can be connected to rotate in two different speed ranges. To the PTO shaft must then for each speed range be connected a shaft pin of which the diameter and/or splining differs from that of the shaft pin assigned to the other speed range. The PTO shaft is part of a PTO gear transmission provided with a gear shift mechanism by means of which the PTO shaft can be connected to rotate either in the lower or the higher speed range. This shift mechanism is connected to a selector lever which is operated from the driver's cab of the tractor. It is however a notable drawback of such arrangements that the tractor driver may, if he so wishes, connect the lower speed range shaft pin to rotate at a speed which is in the higher speed range. If in such a case to the shaft pin has been attached a working implement which is only meant to be operated within the lower speed range, it is possible that said implement suffers damage because it is operated at an excessive speed of rotation.

The object of the present invention is to provide a power take-off apparatus for a tractor by which are avoided the drawbacks associated with the designs known in the state of art which have just been described, and by which is achieved a remarkable improvement over any design of prior art. According to the invention, this obeject is achieved by means of a PTO apparatus of the type described by way of introduction, which further has the features stated in the characterising clause of appended claim 1.

In an advantageous embodiment of the invention defined in appended claim 3, there has furthermore on the PTO shaft been disposed a third gear wheel arranged to be freely rotatable and which has been arranged to operate at a speed of rotation dependent on the speed of rotation of the tractor's traction wheels. The shift sleeve is then optionally connectable to said third gear wheel independent of which one of the shaft pins is attached to the PTO shaft.

Further embodiments of the invention are defined in appended claims 2 and 4.

The significant advantage of the design according to the invention over means of prior art is that when the lower speed range shaft pin is attached to the PTO shaft the PTO shaft cannot be connected to rotate within the higher speed range. Hereby one avoids any damage to the implements that are connected to the PTO shaft. Another significant advantage is that one and the same PTO shaft is connectable to rotate either at a speed independent of the speed of rotation of the traction wheels or at a speed dependent thereon.

Next, the invention is more closely described with the aid of an embodiment example, reference being made to the figure of the attached drawing.

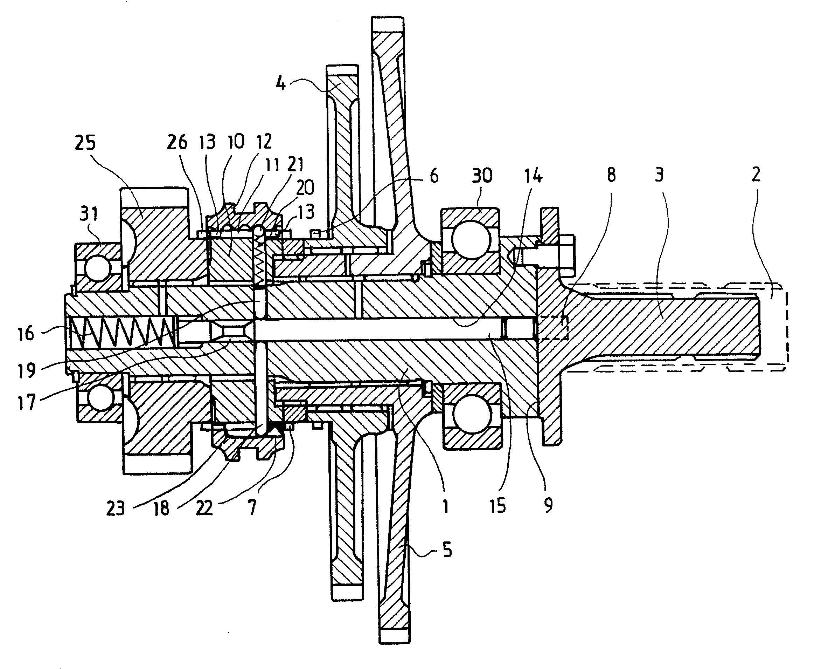

In the figure, the power take-off shaft has been indicated with the reference numeral 1. The PTO shaft 1 has been arranged inside a gear shifting box, the housing of a reduction gear transmission or equivalent, wherein it has been rotatably carried by bearings 30 and 31. On the PTO shaft have been disposed, in the embodiment of Fig. 1, three gear wheels 4,5,25, to be freely rotatable, these gear wheels having been arranged to be alternatively coupled with the PTO shaft 1. Of said gear wheels, the first and second gear wheels 4 and 5 have been arranged to operate within speed ranges which are independent of the speed of rotation of the tractor's traction wheels and are mutually different, while the third gear wheel 25 has been arranged to rotate at a speed which is dependent on the speed of rotation of the tractor's traction wheels. In the embodiment of the figure, the first gear wheel 4 is the high speed range gear wheel, and the second gear wheel 5 is the gear wheel for the low speed range.

On the PTO shaft 1 has been non-rotatably disposed a sleeve 10, upon which has been disposed an axially movable shift sleeve 12. The sleeve 10 is provided with coupling teeth 11, and the shift sleeve 12 is similarly provided with shift sleeve coupling teeth 15, said tooth sets 11 and 15 permitting axial movement of the shift sleeve 12 but preventing the shift sleeve 12 from rotating in relation to the sleeve 10. The gear wheels 4, 5 and 25 are each provided with coupling teeth so that the shift sleeve 12 is alternatively connectable either to cooperate with the coupling teeth 6 of the first gear wheel, with the coupling teeth 7 of the second gear wheel or with the coupling teeth 26 of the third gear wheel.

To the PTO shaft 1 can be rigidly affixed two shaft pins: the first shaft pin 2, for the higher speed range, or the second shaft pin 3, for the low speed range. The first and second shaft pins 2 and 3 differ either regarding their splining and/or, as shown in the figure, regarding their diameter. In the PTO shaft 1 has been provided an axial bore 14, in this bore being disposed an axially displaceable rod 15, loaded with a spring 16 towards said shaft pins 2 or 3, respectively. In said first shaft pin 2 has been provided an axial recess 8, the rod 15 being arranged under effect of the spring 16 to enter this recess when said first shaft pin 2 has been attached to the PTO shaft 1. In said second shaft pin 3 no such recess has been provided: when the second shaft pin 3 has been attached to the PTO shaft 1, the rod 15 will rest, urged by the spring 16, against the end face 9 of the fixing flange of the second shaft pin 3. In the PTO shaft 1 has been provided at least one radially displaceable, radially extending pin 18, which in the situation depicted in the figure extends through the sleeve 10 so that it is in contact at one end with the rod 15 and at the opposite end, with the shift sleeve 12. In the shift sleeve 12 has been formed, for the pin 18, an axial groove 22, which enables the shift sleeve to be axially displaced in the situation depicted in the figure. Furthermore, a radially inwardly directed guide rim 23 has been formed in the groove 22.

In the situation depicted in the figure, to the PTO shaft 1 has been attached the second shaft pin 3, which is intended for the low speed range. The rod 15 has then been urged by the spring 16 against the end face 9, of the fixing flange. In the situation depicted in the figure, the shift sleeve 12 is furthermore in the disengaged position, in which no one of the gear wheels 4,5,25 is coupled with the PTO shaft 1. It is possible, in the situation depicted in the figure, to move the shift sleeve 12 in the figure from the left toward the third gear wheel 25, which rotates at a speed dependent on the speed of rotation of the tractor's traction wheels. Thus, the shift sleeve can be moved to become coupled with the coupling teeth 26 on the third gear wheel, whereby the PTO shaft 1 and the second shaft pin 3 thereto attached will rotate at a speed dependent on the speed of the traction wheels.

It is possible, on the other hand, to move the shift sleeve 12 from the disengaged position of the figure to the right, towards the first and second gear wheels 4 and 5. As was already observed, the first gear wheel 4 is intended for the high speed range and the second gear wheel 5, for the low speed range. When the shift sleeve 12 is moved to the right from the situation of the figure, the coupling teeth 13 on the shift sleeve will at first engage with the coupling teeth 7 of the second gear wheel 5, causing the PTO shaft 1 and the second shaft pin 3 thereto attached to rotate at the speed determined by the second gear wheel 5. From engagement with the coupling teeth 7 of the second gear wheel 5, the shift sleeve 12 can be moved further to the right in the figure, towards the first and second gear wheels 4 and ,5; hereby the shift sleeve moves into a disengaged position in which it is not coupled with any one of the gear wheels 4,5,25.

As can be seen in the figure, there is an axial gap between the coupling teeth 6 of the first gear wheel and the coupling teeth 7 of the second gear wheel, into which the coupling teeth 13 of the shift sleeve may move in the disengaged position just described. From this disengaged position, the shift sleeve 12 cannot be moved further towards said first and second gear wheels, to become engaged with the coupling teeth 6 of the first gear wheel, because in said disengaged position the radial pin 18 lies against the guide rim 23 of the groove 22, whereby this rim prevents any movement of the shift sleeve into engagement with the coupling teeth 6 of the first gear wheel. It is thus understood that the PTO shaft cannot be connected to rotate within the high speed range when to the PTO shaft 1 has been attached the low speed range, second shaft pin 3.

On the rod 15 has been provided a notch 17, or a diminished portion, as can be seen in the figure. When the first shaft pin 2 has been attached to the PTO shaft 1, this shaft pin being intended for the high speed range, the rod 15 is pushed by action of the spring 16 into the axial recess 8 provided in said first shaft pin 2. When the rod 15 is pushed into said axial recess 8, the notch 17 provided on the rod has moved into position in register with the radial pin 18. The shift sleeve 12 can now be moved to be coupled either with the coupling teeth 7 of the second gear whel 5 or with the coupling teeth 26 of the third gear wheel 25, as was already observed in the foregoing. It is thus understood that the PTO shaft 1 can be connected to rotate either at a speed dependent on the speed of rotation of the traction wheels or at a low speed independent thereof.

In addition, the shift sleeve 12 may be moved axially to become engaged with the coupling teeth 6 of the first gear wheel. This has been rendered possible by means of the feature that, after the shift sleeve 12 has first been moved to become coupled with the coupling teeth 7 of the second gear wheel 5 and thence further to the right into the disengaged position, the shift sleeve can be moved from said disengaged position even further to the right because then the radial pin 18 will move inward, positively controlled by the guide rim 23 in the groove 22, radially inward and into the notch 17 provided on the rod 15. It is thus understood that when the first shaft pin 2, intended for the high speed range, has been attached to the PTO shaft 1 the PTO shaft 1 and the first shaft pin 2 thereto attached can be connected to rotate either at the speed in the high speed range determined by the first gear wheel 4 or at the low speed range speed determined by the second gear wheel 5, or at the speed determined by the third gear wheel 25 and which is dependent on the speed of the traction wheels.

There has furthermore been provided a radial hole passing through the PTO shaft 1 and the sleeve 10, and in this hole has been disposed a radial pin 19 and a radial spring 20, these elements urging a ball 21 against the inner surface of the shift sleeve 12. In the shift sleeve 12, recesses have been provided for the ball 21, which the ball 21 may enter. This design is in itself of conventional type, and it is merely intended to keep the shift sleeve 12 in correct position axially when it is in the disengaged position or coupled to one of the tooth sets 6,7,26 of the first, second or third gear wheel 4, 5 or 25, respectively.

The power take-off apparatus may according to the invention also be implemented in such a way that the third gear wheel 25 on the PTO shaft 1 is omitted. The PTO shaft may then be connected to rotate either within the high speed range determined by the first gear wheel 4 or within the low speed range determined by the second gear wheel 5, while in an embodiment of this type the PTO shaft 1 cannot be connected to rotate at a speed dependent on the speed of rotation of the tractor's traction wheels. In this case the so-called driving power take-off is lacking in the PTO apparatus.

## Claims

1. A power take-off apparatus for a tractor, comprising a power take-off (PTO) shaft (1) provided in a gearbox, a reduction gear housing or equivalent, on which shaft there have been disposed at least two gear wheels (4, 5) arranged to be freely rotatable, whereof the first and second gear wheels (4, 5) have been arranged to operate within different speed ranges independent of the speed of rotation of the tractor's traction wheels in such way that the first gear wheel (4) is the gear wheel for the high speed range and the second gear wheel (5) is the gear wheel for the low speed range, two shaft pins (2, 3) belonging to said PTO apparatus which are alternatively connectible to the PTO shaft (1) and which differ at least regarding their longitudinal splining and/or their diameter and of which the first shaft pin (2) is intended for the high speed range and the second shaft pin (3) for the low speed range, and a sleeve (10) belonging to said PTO apparatus, which is non-rotatably connected to the PTO shaft (1) and upon which there has been disposed a shift sleeve (12) non-rotatable in relation to the sleeve (10) and movable in axial direction, a central axial bore (14) being provided in the PTO shaft (1), in which bore there has been disposed an axially movable rod (15) which is loaded by a spring (16) towards the shaft pin (2 or 3) coupled with the PTO shaft (1), and when said second shaft pin (3) is coupled with the PTO shaft (1), the rod (15) is displaced, against the force of the spring (16), so that the shift sleeve (12) is prevented from becoming coupled with said first gear wheel (4), wherein in the PTO shaft (1) there has been provided at least one radial pin (18) extending from the axial bore (14) through the sleeve (10) and movable in radial direction in such manner that said pin (18), when said second shaft pin (3) is coupled with the PTO shaft (1), is displaced into such a position that the shift sleeve (12) can be optionally coupled at least with said second gear wheel (5) but is prevented from becoming coupled with said first gear wheel (4), and wherein in the rod (15) there has been provided a notch (17) or a diminished portion for the pin (18), **characterised** in that the pin (18) is positively guided at one end by the rod (15) and at the opposite end by the shift sleeve (12), and that in the shift sleeve (12) there has been provided for said radial pin (18) an inside axial groove (22) having a radially inwards extending guide rim (23), so that when said first shaft pin (2) is coupled with the PTO shaft (1), the radial pin (18) has been arranged to move under positive control by said guide rim (23) into said notch (17) so that the shift sleeve (12) can be optionally coupled at least with the first or second gear wheel (4 or 5).

2. PTO apparatus according to claim 1, wherein said first shaft pin (2) is provided with an axial recess (8) into which the rod (15) can be pushed in order to bring said notch (17) into register with the pin (18) in axial direction.

3. A power take-off apparatus for a tractor, comprising a power take-off (PTO) shaft (1) provided in a gearbox, a reduction gear housing or equivalent, on which shaft there have been disposed gear wheels (4, 5) arranged to be freely rotatable and to operate within different speed ranges independent of the speed of rotation of the tractor's traction wheels in such way that the first gear wheel (4) is the gear wheel for the high speed range and the second gear wheel (5) is the gear wheel for the low speed range, two shaft pins (2, 3) belonging to said PTO apparatus which are alternatively connectible to the PTO shaft (1), of which the first shaft pin (2) is intended for the high speed range and the second shaft pin (3) for the low speed range, a sleeve (10) belonging to said PTO apparatus, which is non-rotatably connected to the PTO shaft (1) and upon which there has been disposed a shift sleeve (12) non-rotatable in relation to the sleeve (10) and movable in axial direction, a central axial bore (14) being provided in the PTO shaft (1), in which bore there has been disposed an axially movable rod (15) which is loaded by a spring (16) towards the shaft pin (2 or 3) coupled with the PTO shaft (1), and when said second shaft pin (3) is coupled with the PTO shaft (1), the rod (15) is displaced, against the force of the spring (16), so that the shift sleeve (12) can be coupled at least with said second gear wheel (5) but is prevented from becoming coupled with said first gear wheel (4), and when said first shaft pin (2) is coupled with the PTO shaft (1), the shift sleeve (12) can be optionally coupled at least with the first or the second gear wheel (4 or 5), **characterised** in that on the PTO shaft (1) there has furthermore been disposed a third gear wheel (25) which is arranged to be freely rotatable and to operate at a speed dependent on the speed of rotation of the tractor's traction wheels.

4. PTO apparatus according to claim 3, wherein the shift sleeve (12) is optionally connectible to said third gear wheel (25) independent of which one of the shaft pins (2 or 3) is coupled with the PTO shaft (1).

**Revendications**

1. Dispositif de prise de force destiné à un tracteur, comprenant un arbre de prise de force (1) monté dans une boite de vitesse, un logement de réducteur ou équivalent, arbre sur lequel ont été disposées au moins deux roues d'engrenage (4, 5) aptes à entrer librement en rotation, les première et seconde roues d'engrenage (4, 5) étant disposées de façon à fonctionner dans des plages de vitesse différentes indépendantes de la vitesse de rotation de traction du tracteur de telle manière que la première roue d'engrenage (4) est la roue d'engrenage destinée à la plage des grandes vitesses et la seconde roue d'engrenage (5) est la roue d'engrenage destinée à la plage des petites vitesses, deux axes d'arbre (2, 3) faisant partie de l'appareil de prise de force peuvent être raccordés alternativement à l'arbre de prise de force (1) et qui diffèrent au moins en ce qui concerne leurs cannelures longitudinales et/ou leur diamètre et dont le premier axe d'arbre (2) est destiné à la plage des grandes vitesses et le second axe d'arbre (3) est destiné à la plage des petites vitesses, et une douille (10) faisant partie du dispositif de prise de force qui est raccordée de façon non rotative à l'arbre de prise de force et sur lequel a été disposé une douille de changement de vitesse (12 )non rotative par rapport à l'arbre (10) et mobile dans la direction axiale, un alésage axial central (14) étant prévu sur l'axe de prise de force (1), alésage dans lequel a été disposée une tige mobile axialement (15) qui est sollicitée par un ressort (16) en direction de l'axe d'arbre (2, 3) accouplé à l'arbre de prise de force (1) et lorsque le second axe d'arbre (3) est accouplé à l'arbre de prise de force (1), la tige (15) est déplacée, en opposition à la force du ressort (16) de sorte que la douille de changement de vitesse (12) ne peut s'accoupler avec la première roue d'engrenage (4), dispositif dans lequel l'arbre de prise de force (1) comporte au moins un axe radial (18) s'étendant à partir de l'alésage axial (14) à travers la douille (10) et mobile dans la direction radiale de telle sorte que l'axe (18), lorsque le second axe d'arbre (3) est accouplé avec l'arbre de prise de force (1), il est mis en déplacement dans une position telle que la douille de changement de vitesse (12) peut être accouplée facultativement au moins avec la seconde roue d'engrenage (15) mais ne peut s'accoupler avec la première roue d'engrenage (4), et dispositif dans lequel une encoche (17) ou portion de réduction a été prévue dans la tige (15) pour l'axe (18), caractérisé en ce que l'axe (18) est guidé positivement sur une extrémité par la tige (15) et sur l'extrémité opposée par la douille de changement de vitesse (12) et en ce que la douille de changement de vitesse (12) comporte une gorge axiale intérieure (22) destinée à l'axe radial (18), gorge comportant un rebord de guidage s'étendant radialement vers l'intérieur de sorte que lorsque le premier axe d'arbre (2) est accouplé à l'arbre de prise de force (1), l'axe radial (18) est apte à se déplacer sous la commande positive du rebord de guidage (23) jusque dans l'encoche (17) de sorte que la douille de changement de vitesse (12) peut être accouplée facultativement au moins avec la première ou la seconde roue d'engrenage (4, 5).

2. Dispositif de prise de force selon la revendication 1, dans lequel le premier axe d'arbre (2) est muni d'un évidement axial (8) dans lequel peut s'enfoncer la tige (15) pour amener l'encoche (17) en coincidence avec l'axe (18) dans la direction axiale.

3. Dispositif de prise de force destiné à un tracteur, comprenant un arbre de prise de force (1) monté dans une boîte de vitesse, dans un logement de réducteur ou équivalent, arbre sur lequel ont été disposées des roues d'engrenage (4, 5) pouvant être mises en rotation librement et pouvant fonctionner dans des plages de vitesses différentes indépendamment de la vitesse de rotation des roues de traction du tracteur de telle sorte que la première roue d'engrenage (4) est la roue d'engrenage destinée à la plage des grandes vitesses et la seconde roue d'engrenage (5) est la roue d'engrenage destinée à la plage des petites vitesses, deux axes d'arbres (2, 3) faisant partie du dispositif de prise de force et qui peuvent alternativement être raccordés à l'arbre de prise de force (1), dont le premier axe d'arbre (2) est destiné à la plage des grandes vitesses et le second axe d'arbre (3) est destiné à la plage des petites vitesses, une douille (10) faisant partie du dispositif de prise de force qui est raccordée de façon non rotative à l'arbre de prise de force (1) et sur lequel a été disposé une douille de changement de vitesse (12) non rotative par rapport à la douille (10) et mobile dans la direction axiale, un alésage axial central (14) étant prévu dans l'arbre de prise de force (1), alésage dans lequel a été disposé une tige mobile axialement (15) qui est sollicitée par un ressort (16) en direction de l'axe d'arbre (2, 3) accouplé à l'arbre de prise de force (1) et lorsque le second axe d'arbre (3) est accouplé à l'arbre de prise de force (1), la tige (15) est déplacée en opposition à la force du ressort (16) de sorte que la douille de changement de vitesse (12) peut être accouplée au moins avec le second arbre d'engrenage (5) mais ne peut s'accoupler avec la première roue d'engrenage (4) et lorsque le premier axe d'arbre (2) est accouplé avec l'arbre de prise de force (1), la douille de changement de vitesse (12) peut être accouplée facultativement au moins avec la première ou la seconde roue d'engrenage (4, 5) caractérisé en ce que sur l'arbre de prise de force (1) est de plus agencée une troisième roue d'engrenage (25) pouvant être mise en rotation librement et pouvant fonctionner à une vitesse dépendante de la vitesse de rotation des roues de traction du tracteur.

4. Dispositif de prise de force selon la revendication 3, dans lequel la douille de changement de vitesse (12) peut être raccordée facultativement à la troisième roue d'engrenage (25) quel que soit l'axe d'arbre (2 ou 3) qui est accouplé à l'arbre de prise de force (1).

**Patentansprüche**

1. Leistungsabnahme-Gerät für einen Traktor, mit einer Leistungsabnahme-(power take-off = PTO)-Achse (1), die in einem Getriebe, einem Untersetzungsgetriebe-Gehäuse oder Äquivalentem vorgesehen ist, auf welcher Welle wenigstens zwei frei drehbare Getrieberäder (4,5) angeordnet sind, wovon das erste und das zweite Getrieberad (4,5) so angeordnet wurden, daß sie unabhängig von der Rotationsgeschwindigkeit der Traktor-Antriebsräder innerhalb verschiedener Geschwindigkeitsbereiche in einer solchen Weise arbeiten, daß das erste Getrieberad (4) das Getrieberad für den Hochgeschwindigkeitsbereich ist, und das zweite Getrieberad (5) das Getrieberad für den Niedergeschwindigkeitsbereich ist, zwei Wellenzapfen (2,3), die zu dem genannten PTO-Gerät gehören und alternativ mit der PTO-Welle (1) verbindbar sind, und die sich wenigstens im Hinblick auf ihre Längsnutung und/oder ihren Durchmesser unterscheiden, und von denen der erste Wellenzapfen (2) für den Hochgeschwindigkeitsbereich und der zweite Wellenzapfen (3) für den Niedergeschwindigkeitsbereich vorgesehen ist, und mit einer zu dem genannten PTO-Gerät gehörenden Buchse (10), die nicht-drehbar mit der PTO-Welle (1) verbunden ist und auf der eine Schaltmuffe (12) bezüglich zu der Buchse (10) nicht-drehbar und in axialer Richtung beweglich angeordnet ist, einer axialen Zentralbohrung (14), die in der PTO-Welle (1) vorgesehen ist, in welcher Bohrung ein axial beweglicher Stab (15) eingeordnet wurde, der durch eine Feder (16) gegen den mit der PTO-Welle (1) verbundenen Wellenzapfen (2) oder (3) unter Druck steht, und wenn der genannte zweite Wellenzapfen (3) mit der PTO-Welle (1) verbunden ist, wird der Stab (15) gegen die Kraft der Feder (16) verschoben, so daß die Schaltbuchse (12) daran gehindert wird, mit dem genannten ersten Getrieberad (4) verbunden zu werden, wobei in der PTO-Welle (1) wenigstens ein radialer Stift (18) vorgesehen wurde, der sich von der axialen Bohrung (14) durch die Buchse (10) erstreckt und auf solche Weise in radialer Richtung beweglich ist, daß der genannte Stift (18), wenn der zweite Wellenzapfen (3) mit der PTO-Welle (1) verbunden ist, in eine solche Position verschoben wird, daß die Schaltbuchse (12) optional wenigstens mit dem zweiten Getrieberad (5) gekuppelt werden kann, aber darin gehindert wird, mit dem ersten Getrieberad (4) verbunden zu werden, und wobei in dem Stab (15) eine Kerbe (17) oder ein Verjüngungsabschnitt für den Stift (18) vorgesehen ist,
dadurch **gekennzeichnet,** daß der Stift (18) an einem Ende durch den Stab (15) und an dem gegenüberliegenden Ende durch die Schaltbuchse (12) sicher geführt ist, und daß in der Schaltbuchse (12) für den radialen Stift (18) eine innere axiale Nut (22) vorgesehen ist, die einen sich radial nach innen erstreckenden Führungsrand (23) aufweist, so daß wenn der genannte erste Wellenzapfen (2) mit der PTO-Welle (1) verbunden ist, der radiale Stift (18) so angeordnet wurde, daß er sich unter sicherer Führung durch den Führungsrand (23) in die genannte Kerbe (17) bewegt, so daß die Schaltbuchse (12) optional mit wenigstens dem ersten oder zweiten Getrieberad (4) oder (5) verbunden werden kann.

2. PTO-Gerät nach Anspruch 1, wobei der genannte erste Wellenzapfen (2) mit einer axialen

Aushöhlung (8) versehen ist, in die der Stab (15) gedrückt werden kann, um die genannte Kerbe (17) in axialer Richtung mit dem Stift (18) in Deckung zu bringen.

3. Leistungsabnahme-Gerät für einen Traktor, mit einer PTO-Welle (1), die in einem Getriebe, einem Untersetzungsgetriebegehäuse oder Äquivalentem vorgesehen ist, auf welche Welle Getrieberäder (4,5) angeordnet wurden, daß sie frei
drehbar und auf solche Weise innerhalb unterschiedlicher Geschwindigkeitsbereiche arbeiten, die unabhängig von der Rotationsgeschwindigkeit der Traktor-Antriebsräder sind, daß das erste Getrieberad (4) das Getrieberad für den Hochgeschwindigkeitsbereich und das zweite Getrieberad (5) das Getrieberad für den Niedergeschwindigkeitsbereich ist, zwei zu dem genannten PTO-Gerät gehörende Wellenzapfen (2,3), die alternativ mit der PTO-Welle (1) verbindbar sind, wovon der erste Wellenzapfen (2) für den Hochgeschwindigkeitsbereich und der zweite Wellenzapfen (3) für den Niedergeschwindigkeitsbereich vorgesehen ist, einerzu dem genannten PTO-Gerät gehörenden Buchse (10), die nicht-drehbar mit der PTO-Welle (1) verbunden ist, und auf der in axialer Richtung beweglich und nicht-drehbar in Relation zu der Buchse (10) eine Schaltmuffe (12) angeordnet ist, einer axialen Zentralbohrung (14), die in der PTO-Welle (1) vorgesehen ist, in welcher Bohrung ein axial beweglicher Stab (15) angeordnet ist, der durch eine Feder (16) gegen den mit der PTO-Welle (1) verbundenen Wellenzapfen (2) oder (3) unter Druck steht, und wenn der genannte zweite Wellenzapfen (3) mit der PTO-Welle (1) verbunden ist, ist der Stab (15) gegen die Kraft der Feder (16) verschoben, so daß die Schaltbuchse (12) wenigstens mit dem zweiten Getrieberad (5) gekuppelt werden kann, aber daran gehindert wird, mit dem ersten Getrieberad (4) gekuppelt zu werden, und wenn der genannte erste Wellenzapfen (2) mit der PTO-Welle (1) verbunden ist, kann die Schaltbuchse(12) optional wenigstens mit dem ersten oder dem zweiten Getrieberad (4) oder (5) gekuppelt werden, dadurch **gekennzeichnet,** daß auf der PTO-Welle (1) weiterhin ein drittes Getrieberad (25) so angeordnet ist, daß es frei drehbar und mit einer Geschwindigkeit betrieben wird, die von der Rotationsgeschwindigkeit der Traktor-Antriebsräder abhängt.

4. PTO-Gerät nach Anspruch 3, wobei die Schaltbuchse (12) optional mit dem dritten Getrieberad (25) verbindbar ist, unabhängig davon, welcher der Wellenzapfen (2) oder (3) mit der PTO-Welle (1) verbunden ist.